# EUROPÄISCHE PATENTANMELDUNG

(11) **EP 2 689 872 A2**
(43) Veröffentlichungstag der Anmeldung: **29.01.2014**
(21) Anmeldenummer: 13003443.2
(22) Anmeldetag: 09.07.2013
(51) Int. Cl.: B22F 3/105, B29C 67/00

(54) **Vorrichtung und Verfahren zur Herstellung eines dreidimensionalen Objekts**

(30) Priorität: 24.07.2012 DE 102012014577
(71) Anmelder: EADS Deutschland GmbH, 85521 Ottobrunn (DE)
(72) Erfinder: Silvanus, Jürgen, 82008 Unterhaching (DE); Schmidtke, Katja, 81539 München (DE)

(57) **Zusammenfassung**

Die Erfindung betrifft eine Vorrichtung (10) zur Herstellung eines dreidimensionalen Objektes (12) aus einem pulverförmigen Material (14) mittels Verfestigen des pulverförmigen Materials (14) durch Energieeinwirkung, wobei die Vorrichtung (10) eine Arbeitsoberfläche (16), eine Aufbringvorrichtung (18) zum Aufbringen des pulverförmigen Materials (14) auf die Arbeitsoberfläche (16) sowie eine Verfestigungseinrichtung (20) zum Verfestigen des auf die Arbeitsoberfläche (16) aufgebrachten pulverförmigen Materials (14) aufweist. Die Aufbringvorrichtung (18) weist zum Aufbringen von vorbestimmten lokal unterschiedlichen Mengen des pulverförmigen Materials (14) eine magnetisierbare und/oder elektrostatisch auf- und entladbare Übertragungseinrichtung (36) sowie eine Magnetisier- und/oder Ladeeinrichtung (40) auf. Weiter betrifft die Erfindung ein entsprechendes Verfahren zur Herstellung eines dreidimensionalen Objektes (12), bei dem pulverförmiges Material (14) mittels der magnetisierten und/oder elektrostatisch geladenen Übertragungseinrichtung (36) auf die Arbeitsoberfläche (16) aufgebracht wird.

## Beschreibung

Die Erfindung betrifft eine Vorrichtung und ein Verfahren zur Herstellung eines dreidimensionalen Objekts durch selektives Verfestigen eines pulverförmigen Materials mittels Energieeinwirkung.

Solche Vorrichtungen und Verfahren sind beispielsweise aus DE 43 00 478 C1, DE 296 24 498 U1 sowie DE 10 2007 018 126 A1 bekannt.

Zur Herstellung von dreidimensionalen Objekten mittels selektiven Verfestigens durch Energieeinwirkung auf ein pulverförmiges Material sind die folgenden Herangehensweisen bekannt.

Entweder wird ein pulverförmiges Material in ein Pulverbett geschichtet und dann selektiv beispielsweise mit elektromagnetischer Strahlung bestrahlt, so dass das pulverförmige Material an vorbestimmten Stellen sintert und das dreidimensionale Objekt entsteht.

Alternativ kann das pulverförmige Material nacheinander in dünnen Schichten auf einer Arbeitsoberfläche aufgetragen und dann durch selektive Energieeinwirkung an Stellen, an denen das pulverförmige Material eine Schicht des dreidimensionalen Objektes bilden soll, verfestigt werden. Dazu wird das pulverförmige Material zunächst auf die Arbeitsoberfläche aufgestreut und nachfolgend mit einem Wischer oder einer Klinge zu einer gleichmäßigen Schicht geglättet.

Beim Pulverbett als auch beim schichtweisen Auftragen des pulverförmigen Materials auf die Arbeitsoberfläche ist jeweils ein Überschuss an pulverförmigem Material auf der Arbeitsoberfläche vorhanden, wobei dieser Überschuss nicht zur Verfestigung und zum Herstellen des dreidimensionalen Objektes benötigt wird.

Insbesondere bei der Herstellung von Hochtemperaturbauteilen werden pulverförmige Materialien mit relativ teuren und nur eingeschränkt verfügbaren Basisstoffen verwendet, so dass es wünschenswert ist, zur Herstellung eines dreidimensionalen Objektes mit einer möglichst geringen Menge an pulverförmigem Material auszukommen.

Aufgabe der Erfindung ist es daher, eine effektivere Vorrichtung und ein effektiveres Verfahren zur Herstellung eines dreidimensionalen Objektes durch selektive Verfestigung von pulverförmigem Material mittels Energieeinwirkung vorzuschlagen.

Diese Aufgabe wird mit einer Vorrichtung gemäß Anspruch 1 gelöst.

Ein Verfahren zur Herstellung eines dreidimensionalen Objektes ist Gegenstand des Nebenanspruches.

Vorteilhafte Ausgestaltungen der Erfindung sind Gegenstand der Unteransprüche.

Eine Vorrichtung zur Herstellung eines dreidimensionalen Objekts aus einem pulverförmigen Material mittels Verfestigen des pulverförmigen Materials durch Energieeinwirkung weist eine Arbeitsoberfläche auf, auf der das dreidimensionale Objekt aufgebaut wird. Weiter ist eine Aufbringvorrichtung zum Aufbringen des pulverförmigen Materials auf die Arbeitsoberfläche und eine Verfestigungseinrichtung zum Verfestigen des auf die Arbeitsoberfläche aufgebrachten pulverförmigen Materials vorgesehen. Dabei weist die Aufbringvorrichtung zum Aufbringen von vorbestimmten lokal unterschiedlichen Mengen des pulverförmigen Materials auf die Arbeitsoberfläche eine magnetisierbare und/oder elektrostatisch auf- und entladbare Übertragungseinrichtung zum Übertragen des pulverförmigen Materials auf die Arbeitsoberfläche sowie eine Magnetisier- und/oder Ladeeinrichtung zum Magnetisieren und/oder elektrostatischen Auf- und Entladen der Übertragungseinrichtung auf.

Aus beispielsweise dem Laserdruckverfahren ist es bekannt, Toner über eine elektrostatisch aufgeladene oder magnetisierte Bildtrommeloberfläche selektiv an vorbestimmten Positionen auf das zu bedruckende Material aufzubringen. Die Bildtrommel arbeitet dabei als Übertragungseinrichtung zum Übertragen des Toners auf das zu bedruckende Material,

Dazu wird die Bildtrommel gleichmäßig über ihre gesamte Oberfläche aufgeladen bzw. magnetisiert und dann die Ladung an bestimmten Stellen durch Lichteinwirkung gelöscht. Tonerpulver ist derart ausgebildet, dass es sich gleichmäßig nur an entweder den geladenen oder den neutralisierten Stellen anlagert.

Entsprechend arbeitet nun die Übertragungseinrichtung zum Übertragen des pulverförmigen Materials auf die Arbeitsoberfläche der Vorrichtung zur Herstellung eines dreidimensionalen Objekts.

Die Übertragungseinrichtung ist hier jedoch nicht dazu ausgebildet, ein Tonermaterial zu übertragen, das speziell dafür entwickelt worden ist, sich in gleichmäßiger Schichtdicke an eine entsprechend geladene oder magnetisierte Bildtrommel anzulagern. Die Übertragungseinrichtung ist vielmehr so ausgebildet, dass sich das pulverförmige Material, das in seinen Eigenschaften nicht speziell für die Anlagerung an der Übertragungseinrichtung ausgebildet ist, sondern zur Herstellung des dreidimensionalen Objekts mit speziellen Eigenschaften optimiert ist, an der Oberfläche der Übertragungseinrichtung anlagern kann.

Dazu ist eine Magnetisier- und/oder Ladeeinrichtung vorgesehen, die die Übertragungseinrichtung entsprechend dem anzulagernden pulverförmigen Material magnetisieren und/oder elektrostatisch auf- und entladen kann.

Vorzugsweise ist die Magnetisier- und/oder Ladeeinrichtung zum lokalen Magnetisieren und/oder lokalen elektrostatischen Auf- und Entladen der Übertragungseinrichtung an vorbestimmten Positionen ausgebildet.

Somit kann die Übertragungseinrichtung an ganz bestimmten Positionen elektrostatisch geladen oder magnetisiert werden, so dass sich vorteilhaft nur an diesen Positionen das pulverförmige Material anlagert. Es ist auch möglich, die Magnetisierung bzw. die Ladung der Übertragungseinrichtung derart zu gestalten, dass sich vorzugsweise nicht nur an lokal unterschiedlichen Positionen pulverförmiges Material an die Übertragungseinrichtung angelagert, sondern dass vorteilhaft auch unterschiedliche Mengen des pulverförmigen Materials angelagert werden können.

Weiter vorteilhaft ist die Übertragungseinrichtung geometrisch an die Arbeitsoberfläche angepasst und weist insbesondere eine gleiche Breiten- und/oder Längenersteckung auf wie die Arbeitsoberfläche.

So kann die Übertragungseinrichtung mit angelagertem pulverförmigen Material vorzugsweise einfach oberhalb der Arbeitsoberfläche angeordnet und entmagnetisiert oder entladen werden, so dass das pulverförmige Material vorteilhaft direkt auf die gewünschten Positionen auf der Arbeitsoberfläche fällt. Eine laterale Bewegung der Übertragungseinrichtung parallel zur Arbeitsoberfläche kann so vorteilhaft entfallen.

Besonders bevorzugt ist die Übertragungseinrichtung durch eine Rolle und/oder durch eine Platte gebildet.

Eine plattenförmige Ausgestaltung hat den Vorteil, dass die Übertragungseinrichtung vorzugsweise nur über die Arbeitsoberfläche gebracht werden muss und dann das pulverförmige Material vorzugsweise ohne Bewegung in weitere Raumrichtungen aufgebracht werden kann.

Eine Rolle hat den Vorteil, dass durch die aufgerollte Oberfläche, die das pulverförmige Material überträgt, vorteilhaft Platz in der Gesamtvorrichtung eingespart werden kann.

Dazu ist es vorteilhaft, wenn die Rolle einen Umfang aufweist, der der Breitenerstreckung der Arbeitsoberfläche in Rollrichtung der Rolle entspricht.

Alternativ können die Platte und/oder die Rolle auch kürzer bzw. schmäler als die Arbeitsoberfläche ausgebildet sein bzw. die Rolle einen geringeren Umfang aufweisen als die Breitenerstreckung der Arbeitsoberfläche. Dies hat den Vorteil, dass die Übertragungseinrichtung vorzugsweise klein ausgebildet sein kann und so vorteilhaft Platz eingespart werden kann. Es sind dann mehrere Schritte zur Übertragung einer Schicht des pulverförmigen Materials auf die gesamte Arbeitsoberfläche durchzuführen.

Vorzugsweise ist eine Vorratseinrichtung zum Speichern von auf die Arbeitsoberfläche einzubringendem pulverförmigem Material vorgesehen.

Die Übertragungseinrichtung kann dann vorteilhaft aus der Vorratseinrichtung die gewünschte Menge an pulverförmigem Material an den gewünschten Positionen aufnehmen und dann auf die Arbeitsoberfläche übertragen.

Weist weiter vorteilhaft die Vorratseinrichtung eine gleiche Längs- und/oder Breitenerstreckung auf wie die Übertragungseinrichtung und/oder die Arbeitsoberfläche, ist die Übertragung des pulverförmigen Materials aus der Vorratseinrichtung auf die Arbeitsoberfläche vorzugsweise besonders einfach, da lediglich die Übertragungseinrichtung vorzugsweise über und/oder in der Vorratseinrichtung angeordnet wird, um pulverförmiges Material aufzunehmen, und dann vorteilhaft in einem Schritt eine Schicht des pulverförmigen Materials auf die Arbeitsoberfläche aufgebracht werden kann.

Alternativ können Übertragungseinrichtung, Arbeitsoberfläche und Vorratseinrichtung aber auch unterschiedliche Dimensionen aufweisen. Dies kann dann vorteilhaft durch die Übertragungseinrichtungen ausgeglichen werden, wenn diese vorzugsweise lateral über die Vorratseinrichtung bzw. die Arbeitsoberfläche geführt werden kann oder entsprechend geometrisch ausgebildet ist.

Besonders bevorzugt ist die Magnetisier- und/oder Ladeeinrichtung zum Magnetisieren und/oder Aufladen einer in und/oder über der Vorratseinrichtung angeordneten Übertragungseinrichtung an vorbestimmten Positionen und zum Entmagnetisieren und/oder Entladen der auf und/oder über der Arbeitsoberfläche angeordneten Übertragungseinrichtung an vorbestimmten Positionen ausgebildet.

So können vorteilhaft zwei alternative Übertragungsverfahren zum Übertragen des pulverförmigen Materials aus der Vorratseinrichtung auf die Arbeitsoberfläche durchgeführt werden.

Entweder die Übertragungseinrichtung wird komplett mit pulverförmigem Material beschichtet und lässt durch selektive Entmagnetisierung bzw. selektives Entladen auf bzw. über der Arbeitsoberfläche vorzugsweise lediglich an vorbestimmten Positionen pulverförmiges Material auf die Arbeitsoberfläche fallen.

Alternativ kann die Übertragungseinrichtung jedoch auch nur an vorbestimmten Positionen ihrer eigenen Oberfläche pulverförmiges Material aufnehmen, das dann vorzugsweise auf die Arbeitsoberfläche fallen gelassen wird.

Im Falle der Verwendung einer Rolle ist die Rolle vorteilhaft drehbar über der Vorratseinrichtung und/oder der Arbeitsoberfläche gelagert.

So kann die Rolle vorzugsweise über der Vorratseinrichtung und/oder der Arbeitsoberfläche gedreht werden, um so vorteilhaft in einer Platz sparenden Weise pulverförmiges Material aufzunehmen und abzugeben.

Vorzugsweise ist eine Bewegungseinrichtung zum Bewegen der Übertragungseinrichtung zwischen der Vorratseinrichtung und der Arbeitsoberfläche vorgesehen.

So kann die Übertragungseinrichtung vorzugsweise zwischen der Vorratseinrichtung und der Arbeitsoberfläche hin- und her bewegt werden und somit das pulverförmige Material vorteilhaft von der Vorratseinrichtung auf die Arbeitsoberfläche transportiert werden.

Besonders bevorzugt ist die Bewegungseinrichtung zum Bewegen der Übertragungseinrichtung in drei Raumrichtungen und/oder zum Verdrehen und/oder Verschwenken der Übertragungseinrichtung ausgebildet.

Je beweglicher die Bewegungseinrichtung ist, desto mehr Platz kann vorzugsweise in der Gesamtvorrichtung eingespart werden.

Denn im Falle dass die Bewegungseinrichtung die Übertragungseinrichtung lediglich zwischen der Vorratseinrichtung und der Arbeitsoberfläche hin- und her bewegen kann, ist es vorteilhaft, wenn die Übertragungseinrichtung und auch die Vorratseinrichtung vorzugsweise geometrisch exakt an die Arbeitsoberfläche angepasst sind.

Kann die Bewegungseinrichtung die Übertragungseinrichtung jedoch vorteilhaft auch in weitere Raumrichtungen bewegen und auch drehen bzw. verschwenken, können Vorratseinrichtung und/oder Übertragungseinrichtung auch vorteilhaft mit deutlich kleineren Abmessungen als die Arbeitsoberfläche ausgebildet sein, so dass vorzugsweise Platz in der Gesamtvorrichtung eingespart werden kann.

Vorteilhaft wird das Verfahren sowohl im Wesentlichen horizontal zur Arbeitsoberfläche als auch im Wesentlichen vertikal dazu ausgeführt. Insbesondere kann das Verfahren in allen Richtungen zwischen horizontaler Richtung bis vertikaler Richtung zur Arbeitsoberfläche ausgeführt werden. Dazu ist beispielsweise die Übertragungseinrichtung aus der Horizontalen in die Vertikale kippbar, so dass sie im Wesentlichen zwischen horizontal bis vertikal zur Arbeitsoberfläche ausgerichtet werden kann, wenn das pulverförmige Material aufgetragen wird und/oder wenn die Übertragungseinrichtung über der Arbeitsoberfläche bewegt wird. Das pulverförmige Material kann dabei an einzelnen oder mehreren vorbestimmten Positionen aufgebracht werden. Damit sinkt die Zeitrate für die Fertigstellung eines dreidimensionalen Objekts. Vorzugsweise ist eine Steuereinrichtung zum Steuern der Magnetisier- und/oder Ladeeinrichtung und/oder der Bewegungseinrichtung und/oder der Verfestigungseinrichtung vorgesehen.

Die Steuereinrichtung kann dann, je nachdem wie die gewünschte Schicht auszusehen hat, vorzugsweise entsprechend das Magnetisieren bzw. Laden der Übertragungseinrichtung steuern und auch vorteilhaft entsprechend die Bewegungseinrichtung dahingehend steuern, dass sie die Übertragungseinrichtung an die gewünschten Positionen bewegt. Zusätzlich kann die Steuereinrichtung auch vorteilhaft die Verfestigungseinrichtung ansteuern, die dann das auf die Arbeitsoberfläche aufgebrachte pulverförmige Material verfestigt.

Vorzugsweise ist in der Steuereinrichtung eine Speichereinheit vorgesehen, die vorteilhaft einen Bauplan mit der gewünschten Endkontur des dreidimensionalen Objektes gespeichert hat. Der Bauplan kann beispielsweise in Form von 3-D-CAD-Daten gespeichert sein. Die Steuereinrichtung kann dann vorteilhaft entsprechend der in der Speichereinheit gespeicherten Bauplan-Daten die Bewegungseinrichtung, die Magnetisier- und/oder Ladeeinrichtung, die Verfestigungseinrichtung und/oder die Arbeitsoberfläche steuern, so dass das dreidimensionale Objekte vorzugsweise entsprechend dem gespeicherten Bauplan hergestellt werden kann.

Die Verfestigung des pulverförmigen Materials kann beispielsweise durch elektromagnetische Strahlung wie zum Beispiel einen Laserstrahl realisiert werden. Dabei wird ein Laserstrahl, vorteilhaft gesteuert über die Steuereinrichtung, vorzugsweise selektiv durch eine optische Einrichtung wie zum Beispiel eine Spiegelanordnung auf vorbestimmte Positionen gelenkt, auf denen das pulverförmige Material selektiv durch die Übertragungseinrichtung aufgebracht worden ist.

Alternativ kann statt elektromagnetischer Strahlung auch ein Elektronenstrahl verwendet werden. Es ist auch denkbar, das selektiv aufgebrachte pulverförmigen Material vorzugsweise durch starke Hitzeeinwirkungen zu verfestigen.

Vorteilhaft kann die optische Einrichtung beim im Wesentlichen zwischen horizontalem bis vertikalem Auftragen des pulverförmigen Materials so ausgerichtet werden, dass ein Laserstrahl, Elektronenstrahl oder der Strahl einer Wärmequelle horizontal oder schräg auf das zu verfestigende pulverförmige Material auftrifft.

In vorteilhafter Ausgestaltung ist die Arbeitsoberfläche höhenverstellbar.

Dadurch kann die Arbeitsoberfläche vorteilhaft nach jedem Verfestigungsschritt um einen vorbestimmten Weg abgesenkt werden, um so vorteilhaft die nächste Schicht des pulverförmigen Materials auf der gleichen Höhe wie beim vorhergehenden Schritt auf die Arbeitsoberfläche aufbringen zu können. So kann beispielsweise auch vorteilhaft eine Höhenverstellung der Übertragungseinrichtung durch die Bewegungseinrichtung entfallen.

Bei einem Verfahren zur Herstellung eines dreidimensionalen Objektes aus einem pulverförmigen Material mittels selektivem Verfestigen durch Energieeinwirkung wird das Objekt schichtweise erzeugt, wobei jeweils eine Schicht des pulverförmigen Materials auf eine Arbeitsoberfläche aufgebracht und verfestigt wird. Dabei werden zum Aufbringen der Schicht des pulverförmigen Materials die folgenden Schritte durchgeführt:
a) Positionieren einer Übertragungseinrichtung zum Aufbringen des pulverförmigen Materials auf die Arbeitsoberfläche über oder in einer Vorratseinrichtung;
b) Magnetisieren und/oder elektrostatisches Aufladen der Übertragungseinrichtung, so dass sich pulverförmiges Material an der Übertragungseinrichtung anlagert;
c) Bewegen der Übertragungseinrichtung auf oder über die Arbeitsoberfläche;
d) Entmagnetisieren und/oder Entladen der Übertragungseinrichtung, so dass das pulverförmige Material an vorbestimmten Punkten auf die Arbeitsoberfläche fällt.

Vorteilhaft wird das pulverförmige Material nach dem Entmagnetisieren und/oder Entladen der Übertragungseinrichtung mit einer Klinge abgestreift.

Vorteilhaft wird die Übertragungseinrichtung entweder über bzw. in der Vorratseinrichtung oder auf bzw. über der Arbeitsoberfläche selektiv an vorbestimmten Positionen magnetisiert bzw. elektrostatisch aufgeladen.

Vorzugsweise wird die Arbeitsoberfläche nach dem selektiven Verfestigen des pulverförmigen Materials abgesenkt und eine weitere Schicht des pulverförmigen Materials aufgebracht.

Vorteilhafte Ausgestaltungen der Erfindung werden nachfolgend anhand der beigefügten Zeichnungen näher erläutert. Darin zeigt:
- Fig. 1: eine Vorrichtung zur Herstellung eines dreidimensionalen Objektes mit einer Übertragungseinrichtung zum Übertragen eines pulverförmigen Materials auf eine Arbeitsoberfläche;
- Fig. 2: eine erste Ausführungsform der Übertragungseinrichtung aus Fig. 1;
- Fig. 3: eine zweite Ausführungsform der Übertragungseinrichtung aus Fig. 1;
- Fig. 4: eine dritte Ausführungsform der Übertragungseinrichtung aus Fig. 1;
- Fig. 5: einen Teilbereich einer Oberfläche der Übertragungseinrichtungen aus Fig. 2 bis Fig. 4;
- Fig. 6: eine Oberfläche der Übertragungseinrichtungen aus Fig. 2 bis Fig. 4 mit angelagertem pulverförmigem Material;
- Fig. 7a): die Anlagerung von pulverförmigem Material an den Übertragungseinrichtungen aus Fig. 2 bis Fig. 4;
- Fig. 7b): das Herabfallen des an die Übertragungseinrichtungen angelagerten pulverförmigen Materials auf eine Arbeitsoberfläche; und
- Fig. 7c): die Bestrahlung des auf die Arbeitsoberfläche herabgefallenen pulverförmigen Materials zur Verfestigung.

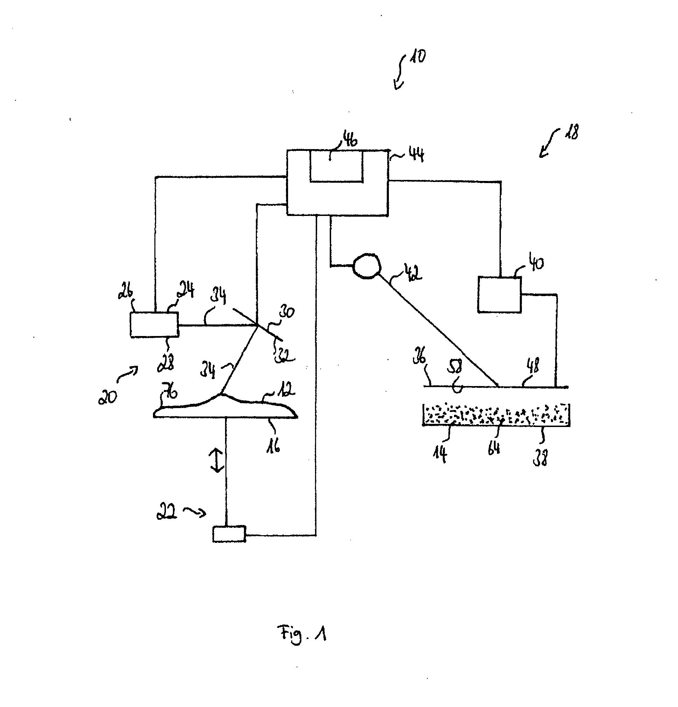

Fig. 1 zeigt eine Vorrichtung 10 zur Herstellung eines dreidimensionalen Objekts 12 aus einem pulverförmigen Material 14 durch Verfestigung des pulverförmigen Materials 14 mittels Einwirkung von Energie.

Die Vorrichtung 10 weist eine Arbeitsoberfläche 16, eine Aufbringvorrichtung 18 zum Aufbringen des pulverförmigen Materials 14 auf die Arbeitsoberfläche 16 sowie eine Verfestigungseinrichtung 20 zum Verfestigen des pulverförmigen Materials 14 auf.

Die Arbeitsoberfläche 16 ist durch eine Höhenverstellungseinrichtung 22 höhenverstellbar.

Die Verfestigungseinrichtung 20 ist durch eine Bestrahlungseinrichtung 24, hier eine Lasereinrichtung 26, gebildet. Die Lasereinrichtung 26 weist eine Laserstrahlemittiereinheit 28 sowie eine Ablenkeinrichtung 30 in Form eines Spiegels 32 auf, der einen aus der Laserstrahlemittiereinheit 28 emittierten Laserstrahl 34 auf das auf der Arbeitsoberfläche 16 aufgeschichtete pulverförmige Material 14 lenkt. Durch die von dem Laserstrahl 34 eingebrachte Energie wird das pulverförmige Material 14 gesintert und verfestigt sich so. Statt des Laserstrahls 34 kann auch ein Elektronenstrahl zum Aufbringen von Energie auf das pulverförmige Material 14 verwendet werden. Das pulverförmigen Material 14 kann weiter auch durch Erhitzen der gesamten Arbeitsoberfläche 16 gesintert bzw. verfestigt werden.

Die Aufbringvorrichtung 18 weist eine Übertragungseinrichtung 36 auf, mit der das pulverförmige Material 14 von einer Vorratseinrichtung 38, in der das pulverförmigen Material 14 gespeichert ist, auf die Arbeitsoberfläche 16 übertragen werden kann.

Dazu weist die Vorrichtung 10 eine Magnetisier- und/oder Ladeeinrichtung 40 auf, mit der die Übertragungseinrichtung 36 magnetisiert bzw. elektrostatisch aufgeladen werden kann.

Zusätzlich ist eine Bewegungseinrichtung 42 vorgesehen, die die Übertragungseinrichtung 36 zwischen der Arbeitsoberfläche 16 und der Vorratseinrichtung 38 hin- und herbewegen kann.

Eine Steuereinrichtung 44 steuert die Höhenverstellungseinrichtung 22, die Laserstrahlemittiereinheit 28, den Spiegel 32, die Magnetisier und/oder Ladeeinrichtung 40 sowie die Bewegungseinrichtung 42, so dass eine gewünschte Menge an pulverförmigem Material 14 an den gewünschten Stellen auf der Arbeitsoberfläche 16 aufgebracht und selektiv durch den Laserstrahl 34 verfestigt wird.

In der Steuereinrichtung 44 ist eine Speichereinheit 46 vorgesehen, die einen Bauplan für das zu erzeugende dreidimensionale Objekt 12 gespeichert hat, so dass die Steuereinrichtung 44 die einzelnen Elemente der Vorrichtung 10 derart ansteuern kann, dass das dreidimensionale Objekt 12 gemäß dem gespeicherten Bauplan erzeugt werden kann.

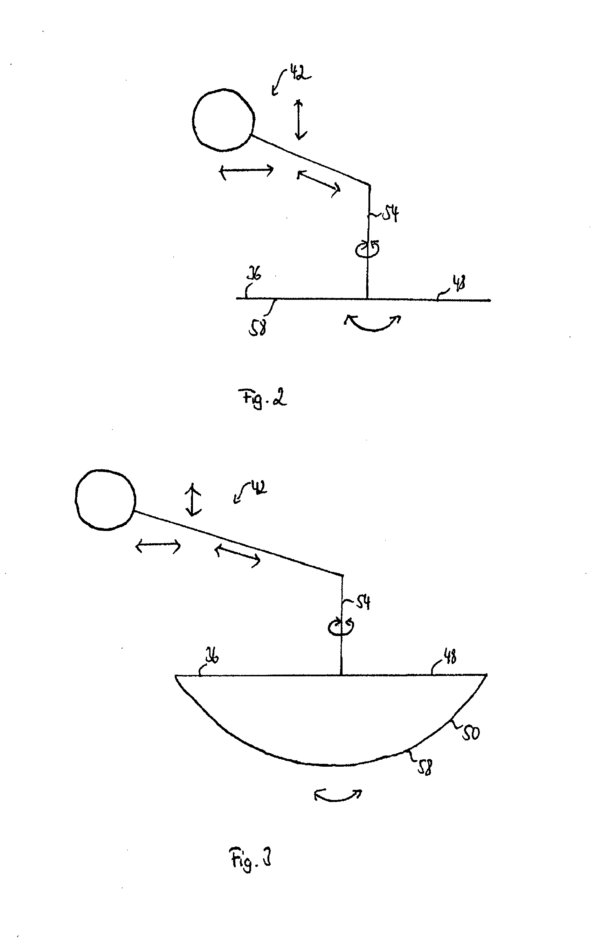

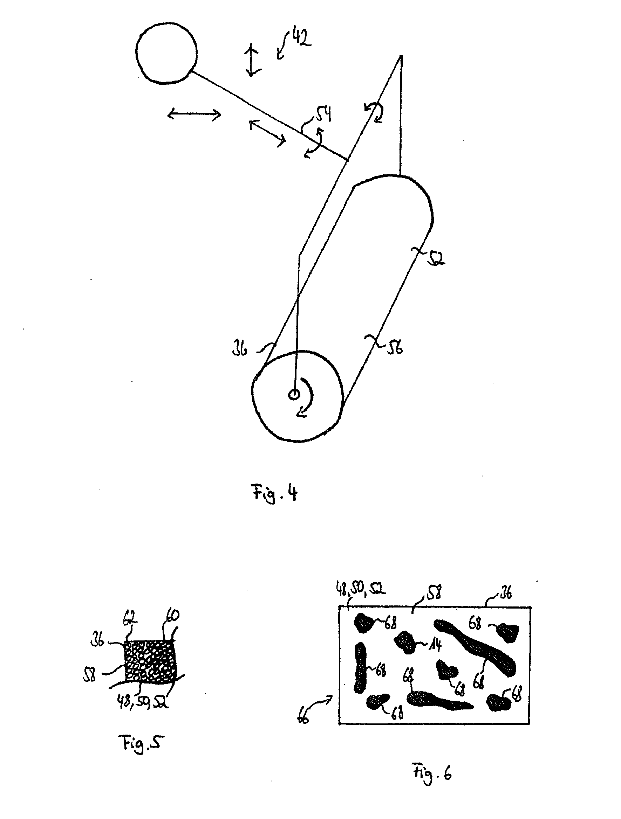

Die Übertragungseinrichtung 36 kann, wie in einer ersten Ausführungsform in Fig. 2 gezeigt, durch eine Platte 48 gebildet sein. Die Platte kann dabei, wie in Fig. 3 gezeigt, eine gewölbte Oberfläche 50 aufweisen. Alternativ kann die Übertragungseinrichtung 36 auch, wie in Fig. 4 gezeigt, durch eine Rolle 52 gebildet sein.

Die Bewegungseinrichtung 42 kann, wie durch die Pfeile in Fig. 2 bis Fig. 4 angedeutet, die Übertragungseinrichtung 36 in alle drei Raumrichtungen bewegen, d.h. in ihrer Höhe verstellen, sie zwischen Arbeitsoberfläche 16 und Vorratseinrichtung 38 bewegen, und horizontal parallel zur Arbeitsoberfläche 16 bzw. der Vorratseinrichtung 38 verschieben. Zusätzlich kann die Bewegungseinrichtung 42 die Übertragungseinrichtung 36 um eine Mittelachse 54 drehen und um eine senkrecht zu der Mittelachse 54 angeordnete weitere Achse verschwenken.

In der in Fig. 4 gezeigten Ausführungsform der Übertragungseinrichtung 36 als Rolle 52 ist die Rolle 52 zusätzlich drehbar an der Bewegungseinrichtung 42 gelagert.

Die in Fig. 2 bis Fig. 4 gezeigten Übertragungseinrichtungen 36 sind geometrisch an die Arbeitsoberfläche 16 angepasst. Das bedeutet, die Platten 48 haben eine gleiche Breiten- und Längenerstreckung wie die Arbeitsoberfläche 16, und die Rolle 52 hat einen Umfang 56, der der Längserstreckung und/oder der Breitenerstreckung der Arbeitsoberfläche 16 entspricht.

Alternativ ist es jedoch auch möglich, die Platten 48 bzw. die Rolle 52 mit kleineren Dimensionen auszugestalten, d.h. die Platten 48 können schmäler und/oder kürzer sein als die Arbeitsoberfläche 16 und auch die Rolle kann einen kleineren Umfang 56 aufweisen.

Eine Oberfläche 58 der in Fig. 2 bis Fig. 4 gezeigten Übertragungseinrichtungen 36 weist eine Vielzahl von Magnetköpfen 60 und/oder Ladungspunkten 62 auf, wie in Fig. 5 gezeigt. Die Magnetköpfe 60 bzw. Ladungspunkte 62 können individuell durch die Magnetisier- und/oder Ladeeinrichtung 40 angesteuert werden, so dass die Magnetisierung der Magnetköpfe 60 verändert werden kann bzw. die Ladungspunkte 62 individuell unterschiedlich geladen werden können.

Wird nun eine derart magnetisierte bzw. aufgeladene Übertragungseinrichtung 36 über oder in der Vorratseinrichtung 38 angeordnet, lagern sich Teilchen 64 des pulverförmigen Materials 14 an den Magnetköpfen 60 bzw. den Ladungspunkten 62 an.

Da die Magnetköpfe 60 bzw. die Ladungspunkte 62 individuell einzeln angesteuert werden können, kann ein Anlagerungsmuster 66 entsprechend Fig. 6 erzeugt werden.

Alternativ kann auch durch Magnetisierung bzw. Aufladung sämtlicher Magnetköpfe 60 bzw. Ladungspunkte 62 die gesamte Oberfläche 58 mit pulverförmigem Material 14 versehen werden, und dann die Oberfläche 58 erst nachdem die Bewegungseinrichtung 42 die Übertragungseinrichtung 36 über der Arbeitsoberfläche 16 angeordnet hat durch Entmagnetisieren der Magnetköpfe 60 bzw. Entladung der Ladungspunkte 62 selektiv individuell entmagnetisiert bzw. entladen werden.

Wird nun die Übertragungseinrichtung 36 durch die Bewegungseinrichtung 42 über die Arbeitsoberfläche 16 gebracht und die Magnetköpfe 60 entmagnetisiert bzw. die Ladungspunkte 62 entladen, fällt das pulverförmige Material 14 entsprechend des in Fig. 6 gezeigten Musters auf die Arbeitsoberfläche 16.

Das pulverförmigen Material 14, das zur Herstellung von dreidimensionalen Objekten 12 verwendet wird, umfasst häufig eine Mischung aus unterschiedlichen Basisstoffen, zum Beispiel unterschiedlichen Metallen wie Rhenium, Chrom, Aluminium, Magnesium, Tantal, usw., mit verschiedenen nichtmetallischen Materialien. Damit unterscheidet es sich grundlegend von in der Laserdrucktechnik verwendetem homogenem Toner. Durch das Aufbringen einer Vielzahl von kleinen Magnetköpfen 60 bzw. Ladungspunkten 62, die individuell ansteuerbar sind, können dennoch sämtliche Materialien mit unterschiedlichen Eigenschaften an der Oberfläche 58 über elektrostatische Anziehung bzw. magnetische Wechselwirkung angelagert werden.

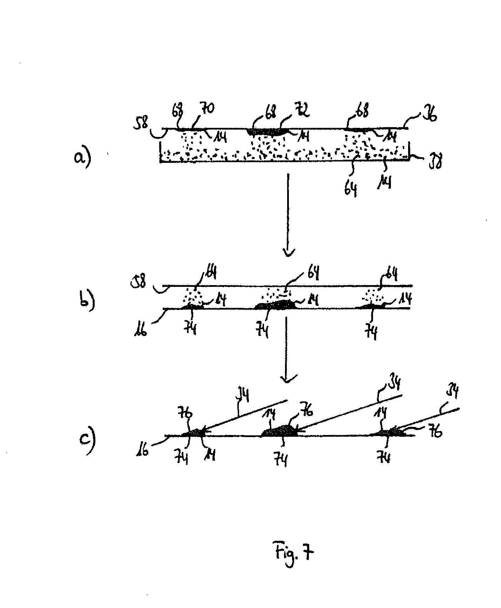

In Fig. 7a) bis 7c) sind Verfahrensschritte zur Herstellung des dreidimensionalen Objekts 12 gezeigt.

In Fig. 7a) ist die Oberfläche 58 der Übertragungseinrichtung 36 selektiv an individuell vorbestimmten Positionen 68 elektrostatisch aufgeladen. Durch elektrostatische Anziehung lagern sich Teilchen 64 des pulverförmigen Materials 14, das in der Vorratseinrichtung 38 gespeichert ist, an denen selektiv geladenen Positionen 68 an. Dabei ist eine erste Position 70 weniger stark aufgeladen als eine zweite Position 72, so dass sich an der zweiten Position 72 mehr Teilchen 64 anlagern als an der ersten Position 70.

In Fig. 7b) wird die Oberfläche 58 der Übertragungseinrichtung 36 entladen, so dass die Teilchen 64 des pulverförmigen Materials 14 nicht mehr durch elektrostatische Anziehungskräfte an der Oberfläche 58 anhaften und somit von der Übertragungseinrichtung 36 abfallen. Unter der Übertragungseinrichtung 36 ist die Arbeitsoberfläche 16 angeordnet, so dass die Teilchen 64 an bestimmten Positionen 74 auf die Arbeitsoberfläche 16 fallen.

Je nach Ausgestaltung der Übertragungseinrichtung 36 verbleibt die Übertragungseinrichtung 36 statisch über der Arbeitsoberfläche 16, beispielsweise bei einer Platte 48, die die gleichen Dimensionen aufweist wie die Arbeitsoberfläche 16, oder wird horizontal über die Arbeitsoberfläche 16 geführt, beispielsweise wenn die Platte 48 mit kleineren Dimensionen ausgestaltet ist als die Arbeitsoberfläche 16. Alternativ kann die Oberfläche 58 auch über die Arbeitsoberfläche 16 rollen, beispielsweise der Ausgestaltung mit einer Rolle 52.

In Fig. 7c) werden die Positionen 74 der Arbeitsoberfläche 16 mit darauf aufgebrachtem pulverförmigem Material 14 selektiv mit elektromagnetischer Strahlung, beispielsweise dem Laserstrahl 34, bestrahlt, so dass das pulverförmigen Material 14 hier verfestigt.

Die in Fig. 7a) bis 7c) gezeigten Schritte werden mehrmals hintereinander durchgeführt, bis ein dreidimensionales Objekt 12 entsprechend dem in der Speichereinheit 46 gespeicherten Bauplan erzeugt worden ist. Dabei wird pro Schritt jeweils eine Schicht 76 des dreidimensionalen Objektes 12 erzeugt, danach wiederum selektiv pulverförmiges Material 14 auf die erzeugte Schicht 76 aufgebracht und diese wieder verfestigt. Dies wird so lange durchgeführt, bis das dreidimensionale Objekt 12 fertig ist.

Bei bekannten Verfahren und Vorrichtungen 10 zur Herstellung dreidimensionaler Objekte 12 war es bislang nötig, innerhalb der Vorrichtung 10 große Volumina an pulverförmigem Material 14 zu transportieren, da die Bauraumvolumenmenge durch das pulverförmige Material 14 abgedeckt werden musste. Bei nur eingeschränkt verfügbarem und bei teurem pulverförmigem Material 14 ist diese Bedingung jedoch von großem Nachteil.

Die derzeit bekannte Methode der Applikation des pulverförmigen Materials 14 auf die Arbeitsoberfläche 16 besteht darin, ein übergroßes Pulvervolumen auf die Arbeitsoberfläche 16 aufzubringen und nachfolgend mittels beispielsweise einer Klinge oder eines Wischers abzustreifen.

Nun wird vorgeschlagen, ein geometrisch geeignetes Funktionselement in Form der Übertragungseinrichtung 36 innerhalb der Vorrichtung 10 lokal elektrostatisch aufzuladen oder zu entladen, was eine sehr exakte Pulverbeladung der Übertragungseinrichtung 36, zum Beispiel einer Rolle 52 oder einer Platte 48, erlaubt. Es kann die genau benötigte Menge pulverförmigen Materials 14 ortsaufgelöst aus der Vorratseinrichtung 38 aufgenommen werden und auf der Arbeitsoberfläche 16 der Vorrichtung 10 positioniert werden.

Die Phänomene der Elektrostatik rühren von den Kräften her, die elektrische Ladungen aufeinander ausüben. Diese Kräfte werden vom Coulombschen Gesetz beschrieben. Auch wenn die beschriebenen Kräfte klein erscheinen, ist die elektrische Kraft zum Beispiel im Vergleich zur Gravitationskraft stark.

Alternativ können auch magnetische Kräfte genutzt werden.

Dadurch entsteht der Vorteil einer Applikation von exakt derjenigen Pulvermenge pro Aufbauschritt, die gerade notwendig ist, sowie einer lokalen Platzierbarkeit von Pulvervolumen, um fehlerhafte Stellen des vorangegangenen Aufbauschrittes zu beseitigen.

### Bezugszeichenliste:

- 10: Vorrichtung
- 12: dreidimensionales Objekt
- 14: pulverförmiges Material
- 16: Arbeitsoberfläche
- 18: Aufbringvorrichtung
- 20: Verfestigungseinrichtung
- 22: Höhenverstellungseinrichtung
- 24: Bestrahlungseinrichtung
- 26: Lasereinrichtung
- 28: Laserstrahlemittiereinheit
- 30: Ablenkeinrichtung
- 32: Spiegel
- 34: Laserstrahl
- 36: Übertragungseinrichtung
- 38: Vorratseinrichtung
- 40: Magnetisier- und/oder Ladeeinrichtung
- 42: Bewegungseinrichtung
- 44: Steuereinrichtung
- 46: Speichereinheit
- 48: Platte
- 50: gewölbte Oberfläche
- 52: Rolle
- 54: Mittelachse
- 56: Umfang
- 58: Oberfläche
- 60: Magnetkopf
- 62: Ladungspunkt
- 64: Teilchen
- 66: Anlagerungsmuster
- 68: Position
- 70: erste Position
- 72: zweite Position
- 74: Position
- 76: Schicht

## Patentansprüche

1. Vorrichtung (10) zur Herstellung eines dreidimensionalen Objekts (12) aus einem pulverförmigen Material (14) mittels schichtweisem Verfestigen des pulverförmigen Materials (14) durch Energieeinwirkung, aufweisend eine Arbeitsoberfläche (16), eine Aufbringvorrichtung (18) zum Aufbringen des pulverförmigen Materials (14) auf die Arbeitsoberfläche (16) und eine Verfestigungseinrichtung (20) zum Verfestigen des auf die Arbeitsoberfläche (16) aufgebrachten pulverförmigen Materials (14), wobei die Aufbringvorrichtung (18) zum Aufbringen von vorbestimmten lokal unterschiedlichen Mengen des pulverförmigen Materials (14) auf die Arbeitsoberfläche (16) eine magnetisierbare und/oder elektrostatisch auf- und entladbare Übertragungseinrichtung (36) zum Übertragen des pulverförmigen Materials (14) auf die Arbeitsoberfläche (16) sowie eine Magnetisier- und/oder Ladeeinrichtung (40) zum Magnetisieren und/oder elektrostatischen Auf- und Entladen der Übertragungseinrichtung (36) aufweist.

2. Vorrichtung (10) nach Anspruch 1,
**dadurch gekennzeichnet, dass** die Magnetisier- und/oder Ladeeinrichtung (40) zum lokalen Magnetisieren und/oder elektrostatischen Auf- und Entladen der Übertragungseinrichtung (36) an vorbestimmten Positionen (68, 70, 72) ausgebildet ist.

3. Vorrichtung (10) nach Anspruch 1 oder 2,
**dadurch gekennzeichnet, dass** die Übertragungseinrichtung (36) geometrisch an die Arbeitsoberfläche (16) angepasst ist und insbesondere eine gleiche Breiten- und/oder Längenersteckung aufweist wie die Arbeitsoberfläche (16).

4. Vorrichtung (10) nach einem der Ansprüche 1 bis 3,
**dadurch gekennzeichnet, dass** die Übertragungseinrichtung (36) durch eine Rolle (52) und/oder durch eine Platte (48) gebildet ist.

5. Vorrichtung (10) nach Anspruch 4,
**dadurch gekennzeichnet, dass** die Rolle (52) einen Umfang (56) aufweist, der der Breitenerstreckung der Arbeitsoberfläche (16) in Rollrichtung der Rolle (52) entspricht.

6. Vorrichtung (10) nach einem der Ansprüche 1 bis 5,
**dadurch gekennzeichnet, dass** eine Vorratseinrichtung (38) zum Speichern von auf die Arbeitsoberfläche (16) einzubringendem pulverförmigem Material (14) vorgesehen ist.

7. Vorrichtung (10) nach Anspruch 6,
**dadurch gekennzeichnet, dass** die Vorratseinrichtung (38) eine gleiche Längs- und/oder Breitenerstreckung aufweist wie die Übertragungseinrichtung (36) und/oder die Arbeitsoberfläche (16).

8. Vorrichtung (10) nach einem der Ansprüche 6 oder 7,
**dadurch gekennzeichnet, dass** die Magnetisier- und/oder Ladeeinrichtung (40) zum Magnetisieren und/oder Aufladen einer in und/oder über der Vorratseinrichtung (38) angeordneten Übertragungseinrichtung (36) an vorbestimmten Positionen (68, 70, 72) und zum Entmagnetisieren und/oder Entladen der auf und/oder über der Arbeitsoberfläche (16) angeordneten Übertragungseinrichtung (36) an vorbestimmten Positionen (68, 70, 72) ausgebildet ist.

9. Vorrichtung (10) nach einem der Ansprüche 4 oder 5 und einem der Ansprüche 6 bis 8,
**dadurch gekennzeichnet, dass** die Rolle (52) drehbar über der Vorratseinrichtung (38) und/oder der Arbeitsoberfläche (16) gelagert ist.

10. Vorrichtung (10) nach einem der Ansprüche 1 bis 9,
**dadurch gekennzeichnet, dass** eine Bewegungseinrichtung (42) zum Bewegen der Übertragungseinrichtung (36) zwischen der Vorratseinrichtung (38) und der Arbeitsoberfläche (16) vorgesehen ist.

11. Vorrichtung (10) nach Anspruch 10,
**dadurch gekennzeichnet, dass** die Bewegungseinrichtung (42) zum Bewegen der Übertragungseinrichtung (36) in drei Raumrichtungen und/oder zum Verdrehen und/oder Verschwenken der Übertragungseinrichtung (36) ausgebildet ist.

12. Vorrichtung (10) nach einem der Ansprüche 1 bis 11,
**dadurch gekennzeichnet, dass** eine Steuereinrichtung (44) zum Steuern der Magnetisier- und/oder Ladeeinrichtung (40) und/oder der Bewegungseinrichtung (42) und/oder der Verfestigungseinrichtung (20) vorgesehen ist.

13. Vorrichtung (10) nach einem der Ansprüche 1 bis 12,
**dadurch gekennzeichnet, dass** die Arbeitsoberfläche (16) höhenverstellbar ist.

14. Verfahren zur Herstellung eines dreidimensionalen Objektes (12) aus einem pulverförmigen Material (14) mittels selektivem Verfestigen durch Energieeinwirkung, wobei das Objekt (12) schichtweise erzeugt wird, wobei jeweils eine Schicht (76) eines pulverförmigen Materials (14) auf eine Arbeitsoberfläche (16) aufgebracht und verfestigt wird, wobei zum Aufbringen der Schicht (76) des pulverförmigen Materials (14) die folgenden Schritte durchgeführt werden:
a) Positionieren einer Übertragungseinrichtung (36) zum Aufbringen des pulverförmigen Materials (14) auf die Arbeitsoberfläche (16) über oder in einer Vorratseinrichtung (38);
b) Magnetisieren und/oder elektrostatisches Aufladen der Übertragungseinrichtung (36) an vorbestimmten Positionen (68, 70, 72), so dass sich pulverförmiges Material (14) an der Übertragungseinrichtung (36) anlagert;
c) Bewegen der Übertragungseinrichtung (36) auf oder über die Arbeitsoberfläche (16);
d) Entmagnetisieren und/oder Entladen der Übertragungseinrichtung (36) an vorbestimmten Positionen (68, 70, 72), so dass das pulverförmige Material (14) an vorbestimmten Positionen (74) auf die Arbeitsoberfläche (16) fällt.

15. Verfahren nach Anspruch 14,
**dadurch gekennzeichnet, dass** die Arbeitsoberfläche (16) nach dem selektiven Verfestigen des pulverförmigen Materials (14) abgesenkt wird und eine weitere Schicht (76) des pulverförmigen Materials (14) aufgebracht wird.
